Europäisches Patentamt

European Patent Office

Office européen des brevets

(11) Veröffentlichungsnummer: **0 462 306 A1**

# (12) EUROPÄISCHE PATENTANMELDUNG

(21) Anmeldenummer: **90111731.7**

(22) Anmeldetag: **21.06.90**

(51) Int. Cl.⁵: **C02F  1/14**

(43) Veröffentlichungstag der Anmeldung:
**27.12.91 Patentblatt  91/52**

(84) Benannte Vertragsstaaten:
**CH DE ES FR GR IT LI**

(71) Anmelder: **IST ENERGIETECHNIK GmbH**
**Ritterweg 1**
**W-7842 Kandern-Wollbach(DE)**

(72) Erfinder: **Suhm, Wolfgang Dipl. Bio-Ing.,**
**Riesstrasse 8,**
**W-7850 Lörrach,(DE)**

(54) **Verfahren und Vorrichtung zur Entmineralisierung von Wasser mit Sonnenenergie in einem kreislaufgeschlossenem Luftsystem.**

㊗ Mit Hilfe von Sonnenenergie wird in einem geschlossenem System, bestehend beispielsweise aus einem Gewächshaus (1) und einem höherliegenden Teil (4) aus offenen Wasserbehältern (2) feuchte und warme Luft (1Ø) erzeugt. Diese gibt in dem höhergelegenem Teil (4) ihre Wärme an die Umgebungsluft (6) ab, was zur Auskondensierung von Wasser führt. Der Transport der inneren Feuchtluft erfolgt durch temperaturbedingte Schwerkraftzirkulation. Durch eine am Kondensatorteil angebrachten unten und oben offenen, kaminartigen Ummantelung, kann ein schwerkraftinduzierter Aufwind den Abtransport der Kondensationswärme an die Umgebungsluft erhöhen, was zu einer größeren Destillationsleistung führt. Nur zum Füllen der Flüssigkeitsbehälter benötigt das Verfahren Fremdenergie und ist ansonsten selbstregelnd.

EP 0 462 306 A1

Die Erfindung betrifft ein Verfahren zur solaren Entmineralisierung von Wasser nach dem Oberbegriff des Patentanspruches 1 und eine Anlage zur Durchführung diese Verfahrens. Die Energie zur Verdunstung des Wassers und zum Transport der Feuchtluft wird dabei ausschließlich durch die solare Strahlungsenergie gedeckt. Als Wärmesenke für die Abführung der Kondensationswärme wird die Umgebungsluft genutzt. Die Versorgung mit genießbarem, hygienisch einwandfreiem Wasser ist ein Grundbedürfnis für Mensch und Tier. Die Problematik aus verschmutztem bzw. versalzenem Wasser durch Destillation trinkbares Wasser zu erzeugen, ist hinreichend bekannt.

Verschiedene bekannte Verfahren und Vorrichtungen zur solaren Meerwasserentsalzung bzw. Entmineralisierung von Wasser sind nachfolgend aufgeführt:

- Entmineralisierung in einem geschlossenen System nach dem Prinzip einer einfachen oder mehrstufigen Solardestille in verschiedenen Modifikationen, bei dem hinter einer lichtdurchlässigen Membran z.B. Glasscheibe oder Kunststofffolie, durch solare Erwärmung verdunstetes Wasser in einem geschlossenen Raum an frei konvektierten oder zusätzlich gekühlten Kühlflächen kondensiert (O.Heschl, Solare Meer- und Brackwasserentsalzung, Teilgutachten des Programmpapiers "Nutzung regenerativer Energiequellen in Entwicklungsländern", BMFT, BMZ, GTZ, GATE Dokumentation 1987; Offenlegungsschrift des Deutschen Patentamtes Nr. DE 36 18 279aA1; US amerikanische Patentanmeldungen Nr. 4.344.824 und Nr. 4.406.749; sowie das belgische Patent Nr. 893.082).
- in einem offenen, frei oder erzwungen durchströmten System, bei dem die von solar erwärmter Außenluft aufgenommene Feuchtigkeit an frei konvektierten oder zusätzlich gekühlten Kondensationsflächen teilweise wieder abgeschieden wird (O.Heschl, Solare Meer- und Brackwasser entsalzung, Teilgutachten des Programmpapiers "Nutzung regenerativer Energiequellen in Entwicklungsländern", BMFT, BMZ, GTZ, GATE Dokumentation 1987; Offenlegungsschriften des Deutschen Patentamtes Nr. 1 642 530, Nr. DE 31 16 929A1 und Nr. DE 34 40 842A1; dt. Patentrag Nr. P 38 29 464.8; sowie das US amerikanische Patent Nr. 3.970.525).

Des weiteren sind konventionelle Meerwasserentsalzungsanlagen bekannt, in denen solare Wärmeenergie partiell zur Einsparung fossiler Brennstoffe genutzt wird. Es sind auch Patentanmeldungen bekannt zur Erzeugung von Prozeßdampf durch Solarenergie (DE 35 26 122A1; DE 35 27 708A1), geeignet zum Betrieb industriell verfügbarer Entsalzungsanlagen.

Als nachteilig haben sich bei den bekannten, sehr unterschiedlichen Verfahren und Anlagen zur solaren Destillation salzhaltigen Wassers, nachstehende Punkte erwiesen, die eine kommerzielle Verbreitung dieser bekannten Verfahren verhindert haben.

- Die Anlagen benötigen bei Verwendung von salzwassergekühlten Kondensatoren einen hohen apparativen Aufwand wie Kühlwasserpumpen, Sprühdüsen und andere Hilfsgeräte und Vorrichtungen die starker Korrosion, Bewuchs und Verschmutzung ausgesetzt sind.
- Zur Aufrechterhaltung des Betriebes muß kontinuierlich Fremdenergie wie Strom oder Wärme bereitgestellt werden. Dies stößt an entlegenen Standorten auf große Versorgungsprobleme.
- Einfache geschlossene Solardestillen (Typ Frühbeet), mit frei konvektierten Kühlflächen benötigen in größeren Anlagen einen hohen Wartungsaufwand, besitzen einen kleinen Wirkungsgrad und reduzieren dadurch das Kosten-Nutzen-Verhältnis dieses Anlagentyps.
- Offene durchströmte Systeme verlieren durch die Abluft große Energie- und Wassermengen und haben nur einen geringen Wirkungsgrad.

Der Erfindung liegt die Aufgabe zugrunde, unter folgenden Gesichtspunkten Meer- bzw. Brackwasser zu entsalzen und dem Bedarf ländlicher Regionen in Entwicklungsländern zur Verfügung zu stellen:

- Ausschließliche Verwendung natürlich vorhandener, regenerativer Energiequellen (Sonne und Wind)
- einfache, von Handwerkern zu installierende kostengünstige Technik
- wirtschaftlicher und wartungsarmer Betrieb

Diese Aufgabe wird erfindungsgemäß dadurch gelöst, daß offene mit salzhaltigem oder verschmutztem Wasser gefüllte Becken in einer geschlossenen, lichtseitig transparenten Gebäudehülle aufgestellt werden. Entsprechend dem bekannten Prinzip von Solarkollektoren, erwärmt sich der Raum unter Einwirkung der Solarstrahlung. Durch Konvektion und Transmission wird Wärme und Wasserdampf an die Raumluft abgegeben, die dadurch leichter als die Umgebungsluft wird. Ein Teil der Gebäudehülle liegt durch Ausnutzung einer Geländeform oder durch Anbau eines Schachtes höher als die Wasserbecken. Dieser höher liegende Teil dient als Wärmetauscher zur Umgebungsluft und damit als Kondensator des Wasserdampfes. Dieser als Kondensator bezeichnete Anlagenteil kann in einem strömungsmechanisch sinnvollen Abstand von einem oben und unten offenen Schacht bzw. Kamin ummantelt werden. Die aus dem Kondensator abgegebene Wärme erwärmt die Luft zwischen Kondensatorwand und Ummantelung und induziert dadurch einen thermischen Aufwind (Kamineffekt), der die Wärme über die obere Kaminöffnung nach außen abführt. Der Aufwind im äußeren Kamin kann durch geeignete Maßnahmen, z.B. durch Ventilatoren oder Vorrichtungen zur Ausnutzung des Windsoges, unterstützt werden. Die solare Einstrahlungsenergie kann im Bedarfsfall durch eine beliebige Wärmequelle ersetzt werden. Die Feuchtigkeitsaufnahme der erwärmten Luft wird durch geeignete Vorrichtungen zur Vergrößerung der Verdunstungsoberfläche unterstützt.

Das salzfreie Kondensat wird unten gesammelt und mit Gefälle einem Speicher zugeführt.

Die gekühlte, feuchtigkeitsgesättigte Luft strömt schwerkraftbedingt wieder nach unten und wird im Verdunstungsraum erneut erwärmt und kann wieder Wasserdampf aufnehmen. Mit steigender Temperaturdifferenz zur Außenluft verstärkt sich der Aufwindeffekt im Kamin und damit der Wärmedurchsatz am Kondensator.

Der Vorteile der Erfindung bestehen darin, daß zum einen die enthalpiereiche Abluft im Kreislauf wieder aufgewärmt wird und zum anderen keine Hilfsenergie für den Transport der Feuchtluft oder des Kühlmediums benötigt wird. Außerdem ist das Verfahren thermodynamisch selbstregelnd.

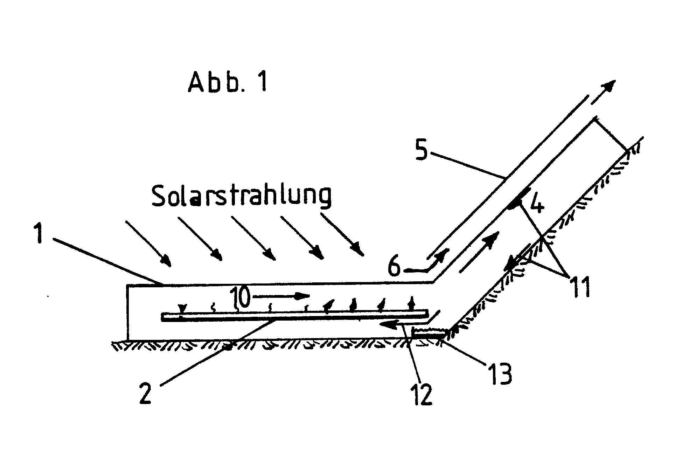

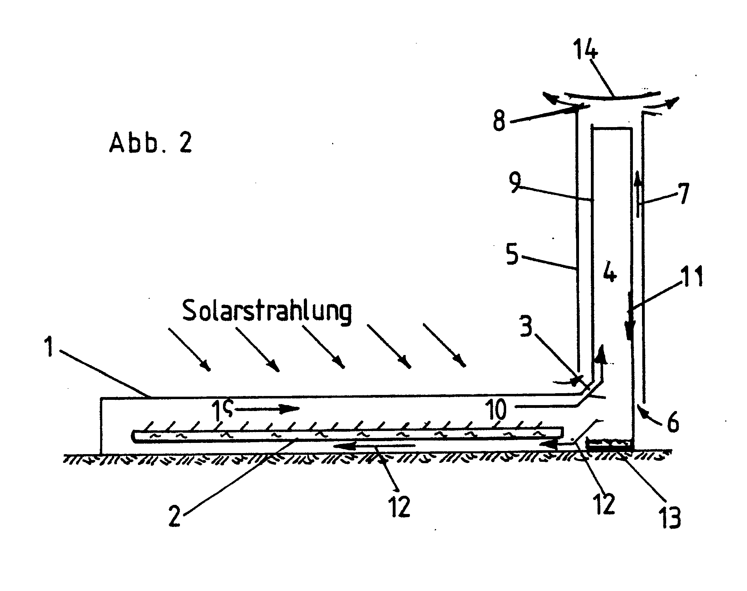

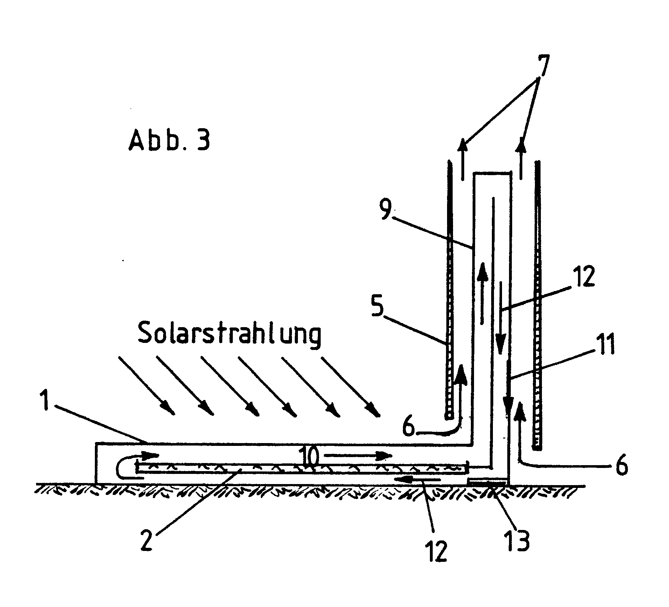

Eine mögliche Vorrichtung zur Durchführung des Verfahrens in ebenem Gelände wird nachfolgend beschrieben, die Zahlen in Klammern entsprechen der jeweiligen Position der schematischen Darstellung in Abb. 2:

Als solarer Wärmesammler dient beispielsweise ein Gewächshaus (1) mit transparenter Folie oder mit Glas abgedeckt , in dem sich die zur Verdunstung vorteilhaft dunkel grundierten Salzwasserbecken (2) befinden. Der Salzwasserzulauf kann kontinuierlich oder sporadisch erfolgen (manuell, solar- oder windkraftbetrieben) mit Überlauf zur Konzentratausschwemmung. Unterhalb eines Anbaues, beispielsweise in Form eines Kamins (5), wird die befeuchtete Warmluft (10) über einen Krümmer (3) in den aufsteigenden Kondensatorschacht (4) eingeleitet. Hier wird die Wärme durch die Kondensatorwand (9) vertikal nach außen geleitet und direkt an die Umgebungsluft (6) oder an den thermisch induzierten Aufwind (7) im Kamin abgegeben. Die Temperatur der aufsteigenden Feuchtluft nimmt ab und die relative Feuchte nähert sich dem Sättigungsgrad. Die feuchte Luft im Kamin kühlt sich an der Wand des Kondensators (9) bis zur Erreichung des Kondensationstemperatur ab. Dadurch wird Wasser (11) abgeschieden, das unten in einem geeigneten Auffangbecken (13) gesammelt und seinem Bestimmungsort zugeführt wird. Durch die Abkühlung wird die Raumluft (13) schwerer und strömt schwerkraftbedingt wieder in den unteren Teil der Anlage zurück wo der Kreislauf wieder beginnt. Bis zur Erreichung eines thermodynamischen Gleichgewichtes zwischen der einfallenden solaren Strahlungsenergie und der abgegebenen Kondensationswärme bzw. sonstigen thermischen Verlusten, erhöht sich die durchschnittliche Temperatur der Feuchtluft im System, was vorteilhaft für den Kühl- und Kondensationseffekt ist.

Zur vorteilhaften Verstärkung der Kühlleistung kann der induzierte Aufwind im Kamin durch geeignete Maßnahmen verstärkt werden, beispielsweise durch Anbringung von Vorrichtung (14) an der Kaminaustrittsöffnung (8), die den Windsog erhöhen oder durch Auslegung der Kaminwand (5) mit Materialien die sich thermodynamisch günstig auf die Erzeugung des Aufwindes auswirken; vorteilhaft wäre auch eine Beschattung der Eintrittsöffnung für die Umgebungsluft (6), beispielsweise durch geeignete Grünbepflanzung.

Das beschriebene Verfahren zur solaren Entmineralisierung von Meer- oder Brackwasser wurde speziell für den Bedarf ländlicher Regionen in frostfreien Klimazonen entwickelt. Besonders in ariden und semi-ariden Küstengebieten können die beschriebenen Anlagen zur Wasserversorgung beitragen. Eine direkte Nutzung des Solardestillen-Kondensats als Trinkwasser bedarf jedoch neben einer Remineralisierung auch einer kontinuierlichen bakteriologischen Qualitätskontrolle.

Die hauptsächliche Anwendung einer aufwindgekühlten Solardestillation liegt in ihrer multifunktionalen landwirtschaftlichen Nutzung. Das aus der Anlage gewonnene Süßwasser kann zur direkten Bewässerung landwirtschaftlicher Agrarprodukte (Gemüse, Früchte, Wein etc.) eingesetzt werden. Um dabei auftretende Wasserverluste möglichst gering zu halten, empfiehlt sich der Einsatz von bekannten Wurzelraum-Tröpfchenbewässerungsanlage (Trickle Irrigation), oder der Anbau in Gewächshäusern entsprechend dem Absorber-Gewächshaus, bzw. eine Kombination aus beidem. Eine zusätzliche Erwerbsquelle während des Betriebes einer Solardestille ergibt sich durch die wirtschaftliche Nutzung des Salzwasserkreislaufes in den Verdunstungsbecken bzw. Kaskaden. Die Seewasserteiche im Absorber-Gewächshaus können bei entsprechendem Durchlauf mit ausreichender Sauerstoffversorgung zur Kultur von Fischen und anderen marinen Produkten (Muscheln, Krabben etc.) intensiv genutzt werden. Der Einfluß der Beckenwassertemperatur auf den Wirkungsgrad der Solardestillation ist im Temperaturbereich solarer Verdunstung gering, sodaß die Wasserkonditionen in den Becken den Anforderungen der Aquakultur optimal angepaßt werden können.

Ökologisch und wirtschaftlich besonders interessant ist die Anwendung der beschriebenen solaren Meerwasserentsalzung zur dezentralen Bewässerung von Wiederaufforstungsanlagen. Der von Energieversorgungsnetzen unabhängige Betrieb, die einfache wartungsarme Technologie und die kostengünstige Installation bieten auch Entwicklungsländern mit einfachen Mitteln die Möglichkeit zur Rekultivierung von Küstenwäldern in ariden Klimazonen.

Eine Kombination von land- bzw. forstwirtschaftlicher Produktion und intensiver Aquakultur innerhalb einer integrierten Farmsystem-Solardestille bietet neben einer verkürzten Amortisationszeit der Gesamtanlage auch eine Existenzgrundlage für ländliche Bevölkerungsschichten in landwirtschaftlich bisher ungenutzten Trockengebieten mit Zugang zu Meer- bzw. Brackwasser.

**Patentansprüche**

1. Verfahren zur Entmineralisierung von Wasser dadurch gekennzeichnet, daß

    1.1 innerhalb eines geschlossenen Raumes Wasser durch Einwirken von Solarstrahlung sich erwärmt und verdampft,

    1.2 die feuchte Warmluft durch Ausnutzung einer Geländeform schwerkraftbedingt in einen höher gelegenen Teil des Raumes strömt und

    1.3 durch Abkühlung durch die Umgebungsluft Wasser als Kondensat ausgeschieden wird wobei

    1.4 das ausgeschiedene Wasser an den Wandungen herunterläuft und unten gesammelt wird während

    1.5 die abgekühlte aber noch feuchte Luft wieder schwerkraftbedingt an den Ort des Verdampfens zurückströmt.

2. Vorrichtung nach Anspruch 1 dadurch gekennzeichnet daß

    2.1 innerhalb des Raumes flache dunkel gefärbte Wasserbehälter aufgestellt werden deren

    2.2 verdunstende Oberfläche durch Einsatz von bekannten Materialien wie Stoffe, Filze vergrößert wird,

    2.3 der Höhenunterschied durch Ausnutzung einer Geländeform oder Anbau einer turmartigen Erhöhung erreicht bzw verstärkt wird.

3. Vorrichtung nach Anspruch 1 und 2 dadurch gekennzeichnet daß zur Verbesserung des Wärmeüberganges an die Umgebungsluft der als Kondensator wirkende höher liegende Teil mit

    3.1 besonders gut wärmeleitenden Teilen wie Blechen ausgerüstet wird,

    3.2 außen mit einer oben und unten offenen Ummantelung umgeben wird, deren Luftschicht durch die abgegebene Kondensationswärme erwärmt, und dadurch einen schwerkraftbedingten Auftrieb induziert, der

    3.3 dadurch verstärkt wird, daß am Ausgang der Umhüllung Aufbauten angebracht werden, die in geeigneter Weise den Windsog verstärken.

4. Vorrichtung nach Anspruch 1 bis 3 dadurch gekennzeichnet, daß der als Kondensator wirkende höher liegende Teil in der Mitte so abgetrennt wird, daß sich eine auf- und absteigende Strömung einstellt.

5. Vorrichtung nach Anspruch 1 bis 4 dadurch gekennzeichnet, daß eine Kombination der Haupt- und Hebenansprüche erfolgt.

6. Vorrichtung nach Anspruch 1 bis 5 dadurch gekennzeichnet, daß die Wasserbecken zur Anzucht von marinen Produkten wie Fischen, Krustentieren oder Algen benützt werden.

Abb. 1

Solarstrahlung

1

5

4

6

10

11

2

12

13

Abb. 2

Solarstrahlung

Abb. 3

Solarstrahlung

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 401 833 (MÜLLER)<br>* Ansprüche 1,3; Figuren 2,3 * | 1 | C 02 F 1/14 |
| Y | DE-A-3 409 977 (MÜLLER)<br>* Ansprüche 1,2; Figuren 2,3 * | 1 | |
| A,D | US-A-4 344 824 (SOLEAU)<br>* Spalte 2, Zeilen 39-41 * | 2 | |
| A,D | US-A-3 970 525 (KUREK)<br>* Spalte 2, Zeilen 65-68 * | 1 | |
| A | FR-A-2 642 416 (VALLON) | | |

**RECHERCHIERTE SACHGEBIETE (Int. Cl.5)**

C 02 F

Der vorliegende Recherchenbericht wurde für alle Patentansprüche erstellt

| Recherchenort | Abschlußdatum der Recherche | Prüfer |
|---|---|---|
| Den Haag | 22 Februar 91 | KASPERS H.M.C. |